# EUROPÄISCHE PATENTSCHRIFT

(11) **EP 2 058 616 B1**
(45) Veröffentlichungstag und Bekanntmachung des Hinweises auf die Patenterteilung: **15.04.2015**
(21) Anmeldenummer: 08105464.5
(22) Anmeldetag: 30.09.2008
(51) Int. Cl.: F27B 17/02, F27D 19/00, A61C 13/20

(54) **Brennofen**
Furnace
Fourneau

(30) Priorität: 07.11.2007 DE 102007053071
(43) Veröffentlichungstag der Anmeldung: 13.05.2009
(73) Patentinhaber: Ivoclar Vivadent AG, 9494 Schaan (LI)
(72) Erfinder: Grünenfelder, Robert, 9492 Eschen (LI)
(74) Vertreter: Splanemann

(56) Entgegenhaltungen:
- EP-A- 1 555 499
- WO-A-02/076330
- DE-A1- 4 019 395
- Andrew S. Tanenbaum: "Computer Networks", 2003, Pearson Education, Inc., Upper Saddle River, New Jersey, US ISBN: 0-13-038488-7 pages 184-193, * the whole document *

## Beschreibung

Die Erfindung betrifft einen Brennofen, gemäß dem Oberbegriff von Anspruch 1.

Brennöfen mit der Möglichkeit der Steuerung über eine externe Datenquelle sind bereits vor längerer Zeit vorgeschlagen worden, insbesondere für größere Dentallabors. Ferner ist es bekannt geworden, die Datenübertragung bei Brennöfen bidirektional erfolgen zu lassen, also beispielsweise auch grundsätzlich die erfolgte Datenübertragung oder sonstige Signale des Ofens zu signalisieren.

Außerdem ist es beispielsweise auch vor längerer Zeit vorgeschlagen worden, das Ende des Brennvorgangs über ein deutliches akustisches oder optisches Signal zu signalisieren, um dem Mitarbeiter des Dentallabors die Notwendigkeit zu signalisieren, für den betreffenden Brennofen tätig zu werden.

Eine integrierte Lösung, bei der ebenfalls eine bidirektionale Schnittstelle realisiert ist, die vor nicht allzu langer Zeit veröffentlicht wurde, ist aus der EP 1 555 499 A1 ersichtlich. Diese Lösung bietet die Möglichkeit, Steuerdaten, aber auch beispielsweise auch Bilddaten über einen Dateneingang dem Brennofen zuzuleiten, wobei es denkbar ist, dies über eine RS-232-Schnittstelle, eine USB-Schnittstelle, oder beispielsweise über ein Lesegerät für Speicherkarten oder für Chipkarten zu realisieren.

Gerade größere Datenmengen lassen sich im Grunde über die zur Verfügung stehenden schnellen Schnittstellen recht rasch übertragen. Dies gilt insbesondere auch für Bilddaten.

Um die Kosten für die Bereitstellung des Brennofens gering zu halten, ist es an sich sinnvoll, den Dateneingang sowohl für die Übermittlung von Steuerdaten als auch für die Übermittlung von Bilddaten, beispielsweise zur Darstellung von Zahnbildern am Ofen oder dem Ofen benachbart, zu verwenden. Während die Übermittlung von Bilddaten weniger kritisch ist, was die Datenkonsistenz angeht, ist es bei der Übermittlung von Steuerdaten sehr wichtig, dass diese in zutreffender Form dem Brennofen zugeleitet werden.

Um eine sichere Datenübertragung zu gewährleisten, ist es ferner an sich bekannt geworden, eine Fehlerkorrektur hinzuzufügen, die die Datenübertragung bei dem Auftreten eines Übermittlungsfehlers abbricht, und die die etwaigen auftretenden Fehler selbsttätig korrigiert.

Diese Art der Datenübertragung hat sich bei Brennöfen jedoch nicht durchgesetzt, da zwar alle Brennöfen mit Dateneingang Daten in Reinform empfangen können, die Fehlerkorrektur jedoch zwischen Empfänger und Sender je abgestimmt sein muss, so dass die bestehenden Unterschiede zwischen den spezifischen Datenformaten, die der Brennofen für seine Steuerdaten braucht, verhindert, dass für alle Brennöfen mit dem gleichen Steuerdatenformat gearbeitet werden kann.

Daher werden heutzutage typischerweise Steuerdaten Brennöfen spezifisch und ggf. sogar separat übermittelt.

Ferner besteht bei Brennöfen das Problem, dass von Fall zu Fall Kalibrierungen erforderlich sind. Dies geschieht typischerweise über spezielle Kalibrierprogramme, die dann einen Abgleich zwischen Soll- und Isttemperatur bei den gefahrenen Temperaturkurven vornehmen. Zwar wäre es grundsätzlich möglich, eine Fernkalibrierung vorzunehmen. Nachdem jedoch das Risiko besteht, dass hierbei Fehler entstehen - sei es, dass ein anderer als der erwünschte Brennofen kalibriert wird, sei es, dass Datenfehler entstehen, wird dies regelmäßig nicht vorgenommen.

Auch entwickeln die Hersteller von Dentalkeramiken vielfach eigene neue Keramiken, die entsprechend angepasste Brennprogramme bedienen. Um dies zu installieren, wird typischerweise das betreffende Brennprogramm über eine Speicherkarte oder Ähnliches in den Brennofen eingespielt.

Demgegenüber liegt der Erfindung die Aufgabe zu Grunde, einen Brennofen gemäß dem Oberbegriff von Anspruch 1 zu schaffen, der eine verbesserte Bedienungssicherheit mit einer höheren Flexibilität verbindet.

Diese Aufgabe wird erfindungsgemäß durch Anspruch 1 gelöst. Vorteilhafte Weiterbildungen ergeben sich aus den Unteransprüchen.

Erfindungsgemäß ist es vorgesehen, sowohl die Steuerdaten für den Brennofen als auch etwaige Bilddaten, wenn der Brennofen eine Anzeigevorrichtung aufweist, in einer besonderen Weise zum Brennofen zu übertragen. Die Daten werden hierbei auf Pakete aufgeteilt, die je eine selbstständige Adressinformation haben und zugleich über ein Fehlerkorrekturschema verfügen. Bei der Übertragung fehlerhafter Daten ergibt sich dann der besonders günstige Vorteil, dass lediglich das fehlerhafte Paket erneut übertragen werden muss, nicht hingegen die gesamte Datenmenge. Überraschend lassen sich hiermit besonders günstig sowohl ganz geringe Datenmengen hoher Qualität - Steuerungsdaten - als auch große Datenmengen geringerer Qualitätsanforderungen - Bilddaten - zuverlässig und angepasst an die jeweilige Erfordernisse des betreffenden Brennofens übermitteln, wobei sich durch die Verwendung des gleichen Standards überraschend die Möglichkeit ergibt, die Datenübertragung in gleicher Weise für unterschiedliche Brennofen auch unterschiedlichen Typs zu realisieren, auch wenn je ganz andere Steuerdaten übertragen werden müssen.

Erfindungsgemäß ist es dementsprechend vorgesehen, Datenpakete vorgegebener Länge mit einem Header oder Adressbits auszustatten, die eine eindeutige Zuordnung zu dem Ziel-Brennofen ermöglichen. Insofern ist es in die Verantwortung des Senders der Daten, also beispielsweise auch des Herstellers des Brennofens, gestellt, die Zuordnung zwischen den Steuerdaten und den Adressdaten richtig vorzunehmen. Die Übertragung erfolgt damit unabhängig von der Qualität des Datenübertragungspfads, wobei beim Erkennen eines fehlerhaften Paketes dies signalisiert wird und die Übertragung des gleichen Datenpakets erneut angefordert wird.

Die Länge der Datenpakete lässt sich in weiten Bereichen an die Erfordernisse anpassen. Bevorzugt wird eine einheitliche, mittlere Paketlänge gewählt, beispielsweise 2 KB. Es ist aber auch möglich, und gerade bei schlechter Qualität des Datenübertragungspfades sinnvoll, eine vergleichsweise kurze Paketlänge wie 512 Bit zu realisieren, die für die Übertragung von Steuerdaten besonders geeignet ist. Die Übertragungszeiten der Bilddaten verlängern sich aus verständlichen Gründen bei reduzierter Datenpaketlänge entsprechend dem Verhältnis zwischen Nutzdaten und Hülldaten, also denjenigen Daten, die für die Adressierung des betreffenden Pakets sowie auch für die Fehlerprüfung bzw. Fehlerkorrektur dienen, so dass bei kleineren Paketen eine vergrößerte Datenmenge übertragen werden muss.

Dies ist insbesondere sinnvoll, wenn eine drahtlose Übertragungstechnik für den Übertragungsweg gewählt wird, wie beispielsweise durch den Einbau eines GRPS-, eines EDGE- oder eines UMTS- oder ggf. eines HSDPA-Moduls, wobei mit zunehmender Geschwindigkeit des Datenübertragungsweges die Reduktion der Nutz-Datenübertragungsrate im Verhältnis zur Brutto-Datenübertragungsrate immer weniger kritisch wird.

Alternativ oder zusätzlich ist es auch möglich, den Brennofen über eine Internetverbindung zu betreiben und die Pakete als IP-Pakete auszugestalten. Die Steuerung kann dann auch über einen Web-Browser erfolgen, wobei die Datenschnittstelle in beliebiger geeigneter Weise realisiert sein kann, beispielsweise auch über ein LAN, das mit einem Router mit dem Internet verbunden ist.

In diesem Fall ist es auch möglich, über eine VPN- oder SSH-Verbindung die Steuerung oder Programmierung des Brennofens aus der Ferne vorzunehmen.

Erfindungsgemäß besonders günstig ist es, wenn sich in diesem Zusammenhang der Bildschirm des Brennofens über eine Datenfernverbindung an einem entfernten Bildschirm, beispielsweise auf dem eines Mobiltelefons in auflösungsreduzierter Form, abbilden lässt. Wenn als Bildschirm ein berührungsempfindlicher Bildschirm eingesetzt wird, lässt sich dies beispielsweise über ein Smartphone oder einen PDA simulieren, wobei es auch möglich ist, die Fernsteuerung mittels einer üblichen Cursorsteuerung über einen Joystick, Pfeiltasten oder Ähnliches zu realisieren.

Erfindungsgemäß ist es dementsprechend vorgesehen, dass die Steuereinrichtung des Brennofens ein Paketmodul aufweist, das für die zutreffende Aufteilung bzw. Zusammenfügung von Daten in Pakete bzw. aus Paketen sorgt. Hierzu gehört beispielsweise ein IP-Modul, aber auch alternativ ein EDGE-, ein GRPS- oder ein UMTS-Modul.

In vorteilhafter Ausgestaltung der Erfindung ist es vorgesehen, die Datenübertragung zwischen dem Brennofen und einer fernen Station, die beispielsweise ein Mobiltelefon oder ein ferner PC sein kann, verschlüsselt vorzunehmen. Hierdurch ist sichergestellt, dass keine Manipulationen durch Dritte vorgenommen werden können, was der Sicherheit der Übertragung und damit der Sicherheit der Fernsteuerung des Brennofens zugute kommt.

Ferner ist es besonders günstig, dass durch die Realisierung eines besonderen Paketmoduls, das die Datenübertragungsfunktion bereitstellt, ein modularer Aufbau gewährleistet ist. Ein derartiges Paketmodul lässt sich dementsprechend auch bei unterschiedlichen Brennöfen einsetzen; auch eine Nachrüstung von Brennöfen mit dem Paketmodul ist möglich.

Es ist auch möglich, das gleiche Paketmodul in verschiedenen Brennöfen einzusetzen, nämlich solchen, bei denen ein Bildschirm vorgesehen ist und solchen, bei denen kein Bildschirm vorgesehen ist. Bei der Verwendung in bildschirmlosen Brennöfen wird das Paketmodul insofern für die Bereitstellung der Steuerdaten eingesetzt.

Erfindungsgemäß ist es vorgesehen, dass die Bilddaten über einen Datenfernübertragungskanal übertragen werden, der insbesondere bidirektional arbeitet.

In einer weiteren vorteilhaften Ausgestaltung ist es vorgesehen, dass das Empfangsformat der Steuereinrichtung für die Daten dem Sendeformat einer SMS für die Steuerungsdaten und/oder dem Sendeformat einer MMS für die Bilddaten entspricht.

In einer weiteren vorteilhaften Ausgestaltung ist es vorgesehen, dass die Steuerungsdaten von den Bilddaten bei Empfang im Brennofen automatisch getrennt werden.

In einer weiteren vorteilhaften Ausgestaltung ist es vorgesehen, dass die Bilddaten Identifizierungsdaten aufweisen oder von diesen begleitet sind, mit welchen gleichzeitig mit der Übertragung von statischen Bildern oder bewegten Bildern, insbesondere Filmen Informationen über die betreffenden Bilddaten übermittelbar sind.

In einer weiteren vorteilhaften Ausgestaltung ist es vorgesehen, dass über die Datenschnittstelle des Brennofens Bestätigungsinformationen über den Brennvorgang im Brennofen und/oder die erledigten Aufträge und/oder die verwendeten Zahnfarben und/oder weitere Dentalparameter übermittelbar sind, insbesondere an den Auftraggeber.

In einer weiteren vorteilhaften Ausgestaltung ist es vorgesehen, dass jedes Paket der Bilddaten eine Information über seine Zieladresse, nämlich den Brennofen, aufweist.

In einer weiteren vorteilhaften Ausgestaltung ist es vorgesehen, dass die Anzeigevorrichtung, insbesondere ein Bildschirm des Brennofens, über mindestens einen berührungsempfindlichen Bereich verfügt, über den Tastaturfunktionen der Steuereinrichtung des Brennofens übermittelbar sind.

In einer weiteren vorteilhaften Ausgestaltung ist es vorgesehen, dass der Brennofen einen Lautsprecher und/oder ein Mikrofon aufweist, über welches der Brennofen nach der Art eines Mobiltelefons arbeitet, und dass die Steuereinrichtung insbesondere eine SMS-Funktion und/oder eine MMS-Funktion aufweist, über welche Textnachrichten und/oder Bilddaten von dem Brennofen versendbar sind.

In einer weiteren vorteilhaften Ausgestaltung ist es vorgesehen, dass über das Paketmodul Informationen für ein Update der Steuereinrichtung übermittelbar sind.

In einer weiteren vorteilhaften Ausgestaltung ist es vorgesehen, dass während der Bedienung des Brennofens ein Hilfemodus einschaltbar ist, über welchen Informationen und Daten zur Bedienung des Ofens, insbesondere drahtlos zum entsprechenden Brennofen übermittelbar und auf dem Bildschirm anzeigbar sind.

In einer weiteren vorteilhaften Ausgestaltung ist es vorgesehen, dass der Brennofen über die Datenschnittstelle und das Paketmodul fernsteuerbar ist.

In einer weiteren vorteilhaften Ausgestaltung ist es vorgesehen, dass eine Bedienungsoberfläche der Fernsteuerung auf dem Bildschirm des Brennofens anzeigbar ist.

In einer weiteren vorteilhaften Ausgestaltung ist es vorgesehen, dass die Datenübermittlung selbst eine Fehlerkorrektur aufweist und beim Erkennen fehlerhafter Daten nur dieses erneut übertragen werden.

In einer weiteren vorteilhaften Ausgestaltung ist es vorgesehen, dass die Fehlerkorrektur und/oder eine Fehlerprüfung ausschließlich auf der Ebene der Datenübermittlung erfolgt, also die Steuerdaten selbst ohne Prüfbit oder dergleichen übertragen werden.

In einer weiteren vorteilhaften Ausgestaltung ist es vorgesehen, dass die Steuerdaten Adressinformationen aufweisen, die eine Adressierung des je zu steuernden Brennofens festlegen.

In einer weiteren vorteilhaften Ausgestaltung ist es vorgesehen, dass der berührungsempflindliche Bereich des Bildschirms auch über Cursorsteuerungsfunktionen verfügt, über welche Cursorfunktion auch eine Positionierung von Objekten auf dem Bildschirm realisierbar ist.

Weitere Vorteile, Einzelheiten und Merkmale ergeben sich aus nachfolgenden Beschreibung eines Ausführungsbeispiels anhand der Zeichnung.

Es zeigen:
- Fig. 1: eine schematische Darstellung einer erfindungsgemäßen Ausführungsform in einer Ausführungsform;
- Fig. 2: eine modifizierte Ausführungsform des Brennofens gemäß Fig. 1.

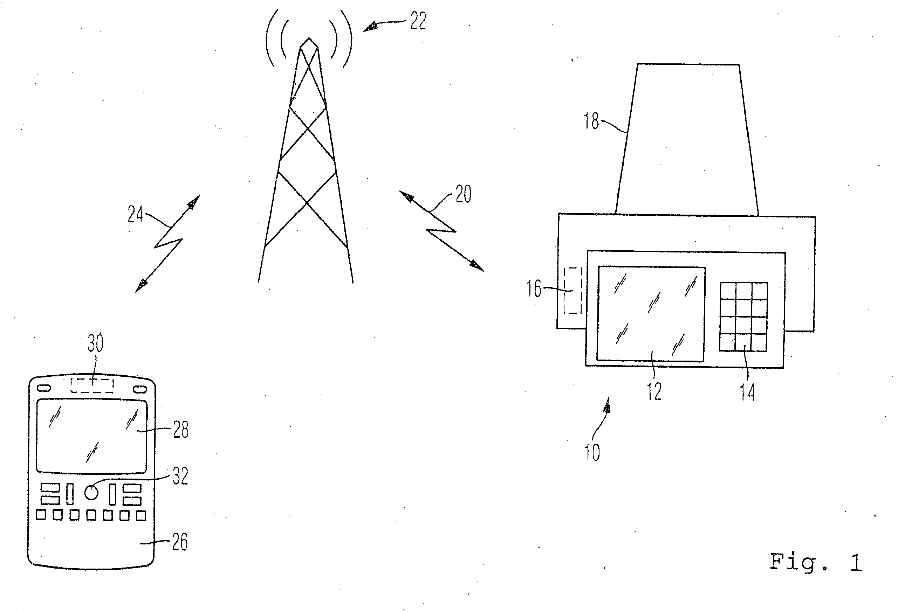

Der in der Figur 1 dargestellte Brennofen 10 weist eine Anzeigevorrichtung 12 auf, auf welcher in an sich bekannter Weise den Ofen betreffende Signale und Daten, wie beispielsweise Brennparameter, darstellbar sind. Die Auswahl der Darstellung und die unmittelbare Steuerung des Ofens erfolgt in ebenfalls an sich bekannter Weise. Wenn die Anzeigevorrichtung 12 einen berührungsempfindlichen Schirm aufweist, lässt sich die Steuerung dort unmittelbar vornehmen. Im dargestellten Ausführungsbeispiel ist eine Tastatur 14 vorgesehen, über welchen die Steuerung anzeigebezogen erfolgt, beispielsweise, indem über Pfeiltasten ein Cursor bewegt wird und die gewünschte Funktion ausgelöst wird.

Zusätzlich ist die Anzeigevorrichtung 12 in der Lage, Dentalersatzteile und/oder Zähne von Patienten bildlich darzustellen. Die betreffenden Daten lassen sich ohne Weiteres aus fotografischen Aufnahmen von Nachbarzähnen des zu erzeugenden Zahns herstellen, wobei beispielsweise die Wahl des Ausschnitts, der auf dem Bildschirm dargestellt ist, einstellbar sein kann.

Erfindungsgemäß ist es in dem Brennofen ein Paketmodul 16 vorgesehen, das erfindungsgemäß in spezieller Weise den Datentausch ermöglicht. Das Paketmodul 16 ist Teil einer Steuereinrichtung 18 des Ofens, die für die Bereitstellung der Brennkurven usw. bestimmt ist und die auch dafür sorgt, dass die auf die Anzeigevorrichtung 12 angezeigten und über die Tastatur 14 vorgegebenen Ofenparameter eines Brennvorgangs eingehalten werden.

Auch wenn hier das Paketmodul 16 als Teil der Steuereinrichtung 18 dargestellt ist, bezieht sich dies im Grunde auf die logische Zuordnung des Paketmoduls 16 zur Steuereinrichtung 18. Dementsprechend ist auch eine physikalische Trennung möglich, beispielsweise, in dem das Paketmodul 16 als eine Art Adapter an den Brennofen 10 angeschlossen wird. Auch die Kombination mit einem Modem ist möglich.

Das Paketmodul 16 erlaubt eine Paketübertragung von Daten über einen Übertragungsweg 20. Im dargestellten Ausführungsbeispiel sind elektromagnetische Wellen als Medium vorgesehen, die über eine Basisstation 22 mit einer entsprechenden Antenne in Form von GRPS-Daten übertragen werden. Über einen entsprechenden Übertragungsweg 24 werden die Daten zu und von einem Mobiltelefon 26 übertragen, das einen vergleichsweise großen Bildschirm 28 zur visuellen Darstellung geeigneter Signale aufweist. Beispielsweise kann der Bildschirm 28 des Mobiltelefons 26 als verkleinerte Kopie der Anzeigevorrichtung 12 ausgestaltet sein, oder es können bestimmte ausgewählte Daten in Kompaktform angezeigt werden.

Das Mobiltelefon 26 weist ein Mobilmodul 30 auf, das die Aufbereitung der Paketdaten übernimmt und insofern mit dem Paketmodul 16 kompatibel ist. Die Daten werden je mit Adressinformationen und Fehlerkorrekturdaten zusammen paketweise übertragen, so dass auch bei schlechter Übertragungsqualität des Übertragungswegs eine sichere Datenübertragung realisierbar ist.

Auch wenn hier als primäres Übertragungsmedium elektromagnetische Wellen vorgesehen sind, versteht es sich, dass ein beliebiges anderes geeignetes Datenmedium vorgesehen sein kann. In Frage kommt beispielsweise die Realisierung von LAN-Verbindungen. Wenn beispielsweise eine WLAN- oder eine LAN-Verbindung eingesetzt wird, kann als steuerndes Endgerät anstelle des Mobiltelefon 26 ein PC eingesetzt werden, der ggf. über einen Router und das Internet mit dem Paketmodul 16 verbindbar ist.

Im Betrieb des erfindungsgemäßen Brennofens lässt sich der Brennofen 10 über das Mobiltelefon 26 unter Ausnutzung dessen über einen Joystick 32 steuerbaren Cursors steuern, wobei die Darstellung der Anzeige parallel auf dem Bildschirm 28 und der Anzeigevorrichtung 12 erfolgt. Es ist auch möglich, eine sog. Masterfunktion bereitzustellen, bei welcher beispielsweise der Hersteller des Brennofen oder ein kundiger Fachberater dem Zahntechniker die Möglichkeiten und die Einstellungen visuell näher bringt. In diesem Fall ist die Steuerung des Brennofens 10 über das Mobiltelefon 26 vorrangig gegenüber der Bedienung über die Tastatur 14.

Über das Mobiltelefon können beispielsweise auch die erwünschten Bilder in Form einer MMS übermittelt werden; die Steuerungsdaten können beispielsweise in Form einer MMS übermittelt werden, und auch ein Software-update ist beispielsweise über ein JAVA-Programm ohne Weiteres realisierbar.

Entsprechendes gilt, wenn als Gerät ein PC eingesetzt wird; hierbei ist die Übermittlung von neuen Brennparametern für beispielsweise eine neuentwickelte Keramik ausgesprochen einfach möglich, und durch die fehlerkorrigierende Paket-Datenübertragung ist auch gewährleistet, dass es nicht zu einer falschen Ofensteuerung kommt.

Ferner besteht auch erfindungsgemäß die Möglichkeit, eine Fernkalibrierung oder gar eine Fernwartung mit Funktionsprüfung der Ofensteuerung vorzunehmen.

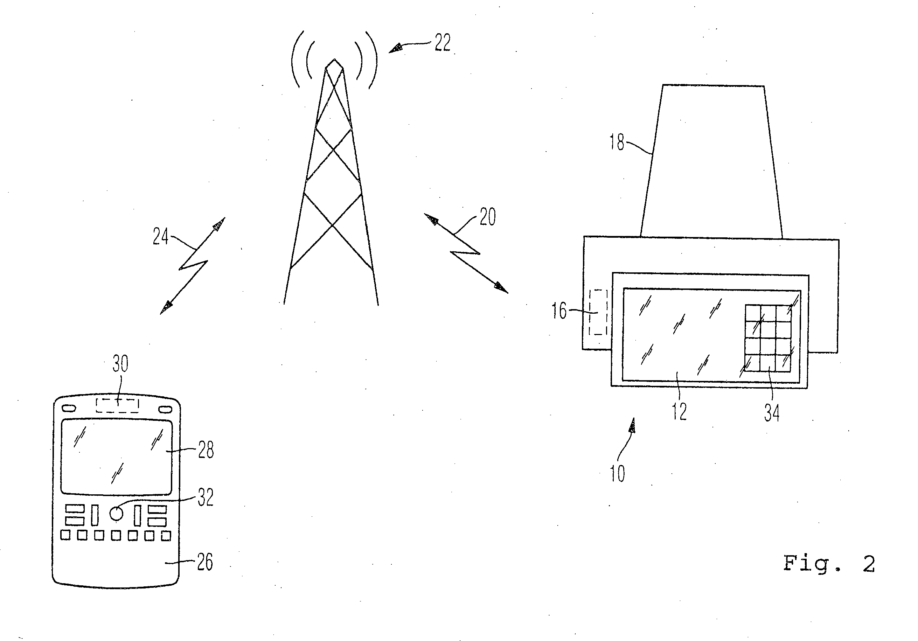

Die in Fig. 2 dargestellte Ausführungsform des Brennofens unterscheidet sich von der gemäß Fig. 1 dadurch, dass ein vergrößerter Bildschirm als Anzeigevorrichtung 12 an den Brennofen 10 vorgesehen ist. Mindestens ein Teil des Bildschirms ist berührungsempfindlich als sog. Touchscreen 34 ausgebildet, wobei durch diesen berührungsempfindlichen Bereich sowohl Tastaturfunktionen als auch beispielsweise Cursorfunktionen auslösbar sind. Cursorfunktionen können beispielsweise durch Bewegung eines Fingers des Benutzers in einer bestimmte Richtung ausgelöst werden.

## Patentansprüche

1. Brennofen (10) für die Dentaltechnik, insbesondere für keramische Dentalmassen, mit einer Anzeigevorrichtung (12), die insbesondere nach der Art eines Touch Screen ausgestattet ist, und mit einer Steuereinrichtung (18), die eine Datenschnittstelle aufweist, **dadurch gekennzeichnet, dass** über diese Datenschnittstelle Daten für die Steuerung des Brennofens und vorzugsweise auch Bilddaten übertragbar sind, und dass die Steuereinrichtung (18) ein Paketmodul (16), insbesondere ein EDGE-, ein GSM-, ein GRPS-und/oder ein UMTS-Modul, aufweist, über welches Steuerdaten und/oder Bilddaten für die Darstellung auf der Anzeigevorrichtung (12) paketweise übertragbar sind, wobei die Datenpakete jeweils eine selbständige Adressinformation aufweisen und über ein Fehlerkorrekturschemata verfügen, wobei der Brennofen über die Datenschnittstelle und das Paketmodul (16) fernsteuerbar ist.

2. Brennofen nach Anspruch 1,
**dadurch gekennzeichnet, dass** das Paketmodul ein EDGE-, ein GSM-, ein GRPS- und/oder ein UMTS-Modul ist.

3. Brennofen nach Anspruch 1 oder 2,
**dadurch gekennzeichnet, dass** die Bilddaten über einen bidirektionalen Datenfernübertragungskanal in Form statischer Bilder oder bewegter Bilder übertragbar sind.

4. Brennofen nach einem der vorhergehenden Ansprüche,
**dadurch gekennzeichnet, dass** beim Erkennen eines fehlerhaften Datenpakets nur dieses erneut übertragbar ist, wobei eine Fehlerkorrektur und/oder eine Fehlerprüfung ausschließlich auf der Ebene der Datenübermittlung erfolgt, also die Steuerdaten selbst ohne Prüfbit oder dergleichen übertragbar sind.

5. Brennofen nach einem der vorhergehenden Ansprüche,
**dadurch gekennzeichnet, dass** das Empfangsformat der Steuereinrichtung (18) für die Daten dem Sendeformat einer SMS für die Steuerungsdaten und/oder dem Sendeformat einer MMS für die Bilddaten entspricht.

6. Brennofen nach einem der vorhergehenden Ansprüche,
**dadurch gekennzeichnet, dass** die Steuerungsdaten von den Bilddaten bei Empfang im Brennofen (10) automatisch trennbar sind.

7. Brennofen nach einem der vorhergehenden Ansprüche,
**dadurch gekennzeichnet, dass** die Bilddaten Identifizierungsdaten aufweisen, mit welchen gleichzeitig mit der Übertragung von statischen Bildern oder bewegten Bildem, Informationen über die betreffenden Bilddaten übermittelbar sind.

8. Brennofen nach einem der vorhergehenden Ansprüche,
**dadurch gekennzeichnet, dass** über die Datenschnittstelle des Brennofens (10) Bestätigungsinformationen über den Brennvorgang im Brennofen (10) und/oder die erledigten Aufträge und/oder die verwendeten Zahnfarben und/oder weitere Dentalparameter übermittelbar sind.

9. Brennofen nach einem der vorhergehenden Ansprüche,
**dadurch gekennzeichnet, dass** jedes Paket der Bilddaten eine Information über seine Zieladresse, nämlich den Brennofen (10), aufweist.

10. Brennofen nach einem der vorhergehenden Ansprüche,
**dadurch gekennzeichnet, dass** die Steuerdaten Adressinformationen des je zu steuernden Brennofens (10) aufweisen.

11. Brennofen nach einem der vorhergehenden Ansprüche,
**dadurch gekennzeichnet, dass** die Anzeigevorrichtung (12), welche als Bildschirm des Brennofens (10) ausgebildet ist, über mindestens einen berührungsempfindlichen Bereich verfügt, über den Tastaturfunktionen der Steuereinrichtung (18) des Brennofens (10) übermittelbar sind.

12. Brennofen nach Anspruch 11,
**dadurch gekennzeichnet, dass** der berührungsempfindliche Bereich des Bildschirms auch über Cursorsteuerungsfunktionen verfügt, über welche Cursorfunktion auch eine Positionierung von Objekten auf dem Bildschirm realisierbar ist.

13. Brennofen nach einem der vorhergehenden Ansprüche,
**dadurch gekennzeichnet, dass** der Brennofen (10) einen Lautsprecher und/oder ein Mikrofon aufweist, über welches der Brennofen (10) nach der Art eines Mobiltelefons (26) arbeitet, und dass die Steuereinrichtung (18) vorzugsweise eine SMS-Funktion und/oder eine MMS-Funktion aufweist, über welche Textnachrichten und/oder Bilddaten von dem Brennofen (10) versendbar sind.

14. Brennofen nach einem der vorhergehenden Ansprüche,
**dadurch gekennzeichnet, dass** über das Paketmodul (16) Informationen für ein Update der Steuereinrichtung (18) übermittelbar sind.

15. Brennofen nach einem der vorhergehenden Ansprüche,
**dadurch gekennzeichnet, dass** während der Bedienung des Brennofens (10) ein Hilfemodus einschaltbar ist, über welchen Informationen und Daten zur Bedienung des Ofens, zum entsprechenden Brennofen (10) übermittelbar und auf dem Bildschirm (28) anzeigbar sind.

16. Brennofen nach Anspruch 15,
**dadurch gekennzeichnet, dass** die Informationen und Daten zur Bedienung des Brennofens (10) drahtlos übermittelbar sind.

17. Brennofen nach einem der vorhergehenden Ansprüche,
**dadurch gekennzeichnet, dass** der Brennofen (10) über die Datenschnittstelle und das Paketmodul (16) fernsteuerbar ist.

18. Brennofen nach einem der vorhergehenden Ansprüche,
**dadurch gekennzeichnet, dass** eine Bedienungsoberfläche der Fernsteuerung auf dem Bildschirm (28) des Brennofens (10) anzeigbar ist.

## Claims

1. A firing furnace (10) for dental technology, in particular for ceramic dental compositions, comprising a display device (12) which is in particular configured in the manner of a touch screen, and comprising a control device (18) which has a data interface, **characterized in that** by way of said data interface data for controlling the firing furnace and preferably also image data can be transmitted, and **in that** the control device (18) has a packet module (16), in particular an EDGE, GSM, GRPS and/or UMTS module, by way of which control data and/ or image data for presentation on the display device (12) can be transmitted in the form of packets, wherein the data packets each have independent address information and are provided with an error correction scheme, wherein the firing furnace can be remotely controlled by way of the data interface and the packet module (16).

2. The firing furnace as claimed in claim 1,
**characterized in that** the packet module is an EDGE, GSM, GRPS and/or UMTS module.

3. The firing furnace as claimed in claim 1 or 2,
**characterized in that** the image data can be transmitted by way of a bidirectional longdistance data transmission channel in the form of static images or moving images.

4. The firing furnace as claimed in any of the previous claims,
**characterized in that** when an erroneous data packet is detected only this packet can be retransmitted, wherein an error correction and/or an error check takes place exclusively on the level of the data transmission, that is to say the control data themselves can be transmitted without a check bit or the like.

5. The firing furnace as claimed in any of the previous claims,
**characterized in that** the receiving format of the control device (18) for the data corresponds to the transmitting format of an SMS for the control data and/or the transmitting format of an MMS for the image data.

6. The firing furnace as claimed in any of the previous claims,
**characterized in that** the control data can be separated automatically from the image data on reception in the firing furnace (10).

7. The firing furnace as claimed in any of the previous claims,
**characterized in that** the image data comprises identification data, with which information on the image data concerned can be transmitted simultaneously with the transmission of static images or moving images.

8. The firing furnace as claimed in any of the previous claims,
**characterized in that** confirmation information on the firing process in the firing furnace (10) and/or the orders processed and/or the tooth colors used and/or further dental parameters can be transmitted by way of the data interface of the firing furnace (10).

9. The firing furnace as claimed in any of the previous claims,
**characterized in that** each packet of the image data has an.item of information on its target address, namely the firing furnace (10). ,

10. The firing furnace as claimed in any of the previous claims,
**characterized in that** the control data have address information on the firing furnace (10) that is respectively to be controlled.

11. The firing furnace as claimed in any of the previous claims,
**characterized in that** the display device (12) which is configured as a screen of the firing furnace (10) has at least one touch-sensitive region by way of which keyboard functions can be transmitted to the control device (18) of the firing furnace (10).

12. The firing furnace as claimed in claim 11,
**characterized in that** the touch-sensitive region of the screen also has cursor control functions by way of which cursor function positioning of objects on the screen can also be realized.

13. The firing furnace as claimed in any of the previous claims,
**characterized in that** the firing furnace (10) has a loudspeaker and/or a microphone by way of which the firing furnace (10) operates in the manner of a cellphone (26), and **in that** the control device (18) has preferably an SMS function and/or an MMS function by way of which text messages and/or image data can be sent from the firing furnace (10).

14. The firing furnace as claimed in any of the previous claims,
**characterized in that** by way of the packet module (16) information for an update can be transmitted to the control device (18).

15. The firing furnace as claimed in any of the previous claims,
**characterized in that** it is possible while the firing furnace (10) is being operated to switch on a help mode by way of which information and data for operating the furnace can be transmitted to the corresponding firing furnace (10) and can be displayed on the screen (28).

16. The firing furnace as claimed in claim 15,
**characterized in that** the information and data for operating the furnace (10) can be transmitted wirelessly.

17. The firing furnace as claimed in any of the previous claims,
**characterized in that** the firing furnace (10) can be remotely controlled by way of the data interface and the packet module (16).

18. The firing furnace as claimed in any of the previous claims,
**characterized in that** an operator interface of the remote control can be displayed on the screen (28) of the firing furnace (10).

## Revendications

1. Four (10) pour la technique dentaire, en particulier pour les masses dentaires en céramique, avec un dispositif d'affichage (12), qui est équipé en particulier à la manière d'un écran tactile type d'écran tactile et avec un dispositif de commande (18), qui dispose d'une interface de données, **caractérisée en ce que** par l'intermédiaire de cette interface de données des données pour la commande du four et de préférence aussi des données d'image peuvent être transférées et que le dispositif de commande (18) présente un module de transmission par paquet (16), en particulier un module EDGE, GSM, GPRS ou UMTS, par lequel des données de commande et/ou des données d'image pour être représentées sur le dispositif d'affichage (12) peuvent être transmises par paquets, où chaque paquet de données présente une information d'adresse distincte et dispose d'un schéma de correction d'erreurs, où le four peut être commandé par l'intermédiaire de l'interface de données et le module de transmission par paquet (16).

2. Four selon la revendication 1,
**caractérisé en ce que** le module de transmission par paquet est un module EDGE, un GSM, GPRS ou UMTS.

3. Four selon la revendication 1 ou 2, **caractérisé en ce que** les données d'image sont transférables sur un canal de transmission de données bidirectionnel sous forme d'images statiques ou d'images en mouvement.

4. Four selon l'une des revendications précédentes,
**caractérisé en ce que** lorsqu'un paquet défectueux est détecté, seul celui-ci est à nouveau transférable, où une correction d'erreurs et/ou une vérification d'erreurs s'effectue exclusivement au niveau de la transmission de données, donc les données de commande elles-mêmes sont transférables sans bits de contrôle ou similaire.

5. Four selon l'une des revendications précédentes,
**caractérisé en ce que** le format de réception du dispositif de commande (18) pour les données correspond au format d'envoi d'un SMS pour les données de commande et/ou au format d'envoi d'un MMS pour les données d'image.

6. Four selon l'une des revendications précédentes,
**caractérisé en ce que** les données de commande sont automatiquement séparées des données de l'image lors de la réception dans le four (10).

7. Four selon l'une des revendications précédente,
**caractérisé en ce que** les données d'image présentent des données d'identification, avec lesquelles simultanément avec la transmission d'images statiques ou d'images en mouvement, des informations par rapport aux données d'image concernées peuvent être transmises.

8. Four selon l'une des revendications précédentes,
**caractérisé en ce que** des données de confirmation de la cuisson dans le four (10) et/ou des tâches réalisées et/ou des couleurs de la dent et/ou d'autres paramètres dentaires peuvent être transmises par l'intermédiaire de l'interface de données du four (10).

9. Four selon l'une des revendications précédentes,
**caractérisé en ce que** chaque paquet de données d'image présente une information par rapport à son adresse de destination, à savoir le four (10).

10. Four selon l'une des revendications précédentes,
**caractérisé en ce que** les données de commande présentent des informations d'adresse de chaque four (10) à commander.

11. Four selon l'une des revendications précédentes,
**caractérisé en ce que** le périphérique d'affichage (12), qui est conçu comme un écran du four (10), dispose d'au moins une zone sensible au toucher, par l'intermédiaire de laquelle les fonctions du clavier du dispositif de commande (18) du four (10) peuvent être transmises.

12. Four selon la revendication 11,
**caractérisé en ce que** la zone sensible au toucher de l'écran comporte également des fonctions de commande du curseur, par l'intermédiaire de ladite fonction de curseur un positionnement des objets sur l'écran est aussi possible.

13. Four selon l'une des revendications précédentes,
**caractérisé en ce que** le four (10) présente un haut-parleur ou un microphone, par l'intermédiaire duquel le four (10) fonctionne à la manière d'un téléphone moloile (26), et que le dispositif de commande (18) a de préférence une fonction SMS et/ou une fonction MMS, par l'intermédiaire de laquelle des messages de texte et/ou des données d'image peuvent être transmis du four (10).

14. Four selon l'une des revendications précédentes,
**caractérisé en ce que** des informations (16) pour une mise à jour du dispositif de commande (18) peuvent être transmisses par l'intermédiaire du module de transmission par paquet (16).

15. Four selon l'une des revendications précédentes,
**caractérisé en ce que** pendant l'opération du four (10) un mode d'assistance peut être activé, par l'intermédiaire duquel des informations et des données pour le fonctionnement du four, peuvent être transmises vers le four correspondant (10) et peuvent être affichées à l'écran (28).

16. Four selon la revendication 15,
**caractérisé en ce que** les informations et les données pour le fonctionnement du four (10) peuvent être transmises sans fil.

17. Four selon l'une des revendications précédentes,
**caractérisé en ce que** le four (10) peut être télécommandé par l'intermédiaire de l'interface de données et du module de transmission par paquet (16).

18. Four selon l'une des revendications précédentes,
**caractérisé en ce qu'**une interface utilisateur de la télécommande peut être affichée à l'écran (28) du four (10).
